# EUROPÄISCHE PATENTSCHRIFT

(11) **EP 1 141 799 B1**
(45) Veröffentlichungstag und Bekanntmachung des Hinweises auf die Patenterteilung: **28.05.2003**
(21) Anmeldenummer: 00904830.7
(22) Anmeldetag: 04.01.2000
(51) Int. Cl.: G05B 19/418

(54) **SYSTEM UND VERFAHREN ZUM BEDIENEN UND BEOBACHTEN EINES AUTOMATISIERUNGSSYSTEMS**
SYSTEM AND METHOD FOR OPERATING AND MONITORING AN AUTOMATION SYSTEM
SYSTEME ET PROCEDE POUR LE CONTROLE-COMMANDE D'UN SYSTEME D'AUTOMATISATION

(30) Priorität: 12.01.1999 DE 19900884
(43) Veröffentlichungstag der Anmeldung: 10.10.2001
(73) Patentinhaber: SIEMENS AKTIENGESELLSCHAFT, 80333 München (DE)
(72) Erfinder: FRIEDRICH, Wolfgang, D-91088 Bubenreuth (DE); MORITZ, Soeren, D-91353 Wimmelbach (DE); POHANY, Johann, D-90596 Schwanstetten-Schwand (DE); WOLF, Rene, D-91058 Erlangen (DE)
(86) Internationale Anmeldenummer: DE0000033
(87) Internationale Veröffentlichungsnummer: WO00042481

(56) Entgegenhaltungen:
- EP-A- 0 549 504
- EP-A- 0 780 800
- EP-A- 0 782 100
- EP-A- 0 825 506
- WO-A-00/02162
- WO-A-00/07079
- DE-A- 19 825 302
- US-A- 5 647 009
- NATONEK E ET AL: "MODEL BASED VISION AS FEEDBACK FOR VIRTUAL REALITY ROBOTICS ENVIRONMENTS" , PROCEEDINGS OF THE VIRTUAL REALITY ANNUAL INTERNATIONAL SYMPOSIUM,US,LOS ALAMITOS, IEEE COMP. SOC. PRESS, PAGE(S) 110-117 XP000529977ISBN: 0-7803-2543-5 Abbildung 1

## Beschreibung

System und Verfahren zum Bedienen und Beobachten eines Automatisierungssystems mit Prozeßvisualisierung und Prozeßsteuerung durch virtuelle Anlagenmodelle als Abbild einer realen Anlage

Die Erfindung betrifft ein System zum Bedienen und Beobachten eines realen Prozesses einer realen Anlage, insbesondere eines Automatisierungssystems.

Die Erfindung betrifft weiter ein Verfahren zum Bedienen und Beobachten eines realen Prozesses einer realen Anlage, insbesondere eines Automatisierungssystems.

Ein derartiges Bedien- und Beobachtungssystem kommt beispielsweise im Bereich der Automatisierungstechnik zum Einsatz und bildet das sogenannte Mensch-Maschine-Interface (MMI) das vielfach auch als HMI (Human Machine Interface) bezeichnet wird.

In der nicht vorveröffentlichten WO 00/07079 ist ein System und Verfahren zur dynamischen Verwaltung von Informationsdaten als Informationsquellen einer virtuellen Vorrichtung beschrieben. Die virtuelle Vorrichtung ist das Abbild einer realen Vorrichtung, beispielsweise einer Industrieanlage. Ein umfassender Überblick über die Gesamtvorrichtung sowie ein zielgerichteter Einblick in Teilkomponenten der Vorrichtung wird dadurch ermöglicht, dass die virtuellen Teilkomponenten entsprechend den technologischen Strukturen als Programme in einer vernetzten Rahmenstruktur eingebettet sind.

Die nicht vorveröffentlichte WO 00/02162 beschreibt ein Verfahren und eine Vorrichtung zur Erstellung eines virtuellen Anlagenmodells als Abbild einer realen Anlage. Als Datenbasis hierfür dienen einerseits digitale Bilddaten, die Abbilder einer realen Anlage darstellen und andererseits Anlagenkomponente einer Komponentenbibliothek. Das erzeugte virtuelle Abbild der realen Anlage dient der Dokumentation des tatsächlichen Aufbaus der Anlage sowie einer vereinfachten Störungsanalyse in einem Störungsfall. Zusätzlich wird die Verwendung des virtuellen Anlagenmodells für Bedien- und Beobachtungssysteme aufgezeigt.

Aus der EP 0 782 100 A2 ist eine Vorrichtung zur Ermittlung der räumlichen Ausdehnung eines Objekts bekannt, welche auf der Grundlage einer Vielzahl von Bildern aus unterschiedlichen räumlichen Richtungen und Informationen über die in der Position der verwendeten Kamera ermittelt wird. Das so gewonnene 3 D-Modell kann auf einem Bildschirm zweidimensional dargestellt werden.

Die EP 0 285 506 A2 beschreibt ein System für Prozesssteuerung, welches einen Serverrechner und einen Client-Rechner enthält, die über ein Netzwerk, z.B. das Internet oder ein Intranet, gekoppelt sind. Der Server ist zusätzlich über Interface-Bausteine mit einem realen Prozess verbunden. Der Client ist so ausgeführt, dass ein Bedienen- und Beobachten des Prozesses mittels Kommunikation über das Netz und den Server möglich wird.

Der Erfindung liegt die Aufgabe zugrunde, ein System und ein Verfahren zum Bedienen und Beobachten anzugeben, das eine möglichst realitätsnahe Darstellung und Bewertung von Prozeßzuständen und damit eine fehlersichere Bedienung ermöglicht.

Diese Aufgabe wird durch ein System sowie ein Verfahren mit den in den Ansprüchen 1 bzw. 5 angegebenen Merkmalen gelöst.

Der Erfindung liegt die Erkenntnis zugrunde, das eine möglichst realitätsnahe und damit fehlersichere Bedienung eines Automatisierungssystems dadurch sichergestellt werden kann, daß das Mensch-Maschine-Interface aus virtuellen Anlagemodellen als Abbild der realen Anlagenkomponenten gebildet wird.

Diese virtuellen Anlagenmodelle werden mit Hilfe der Visualisierungsmittel, beispielsweise einer Anzeigevorrichtung dem Anwender visualisiert, wobei je nach Anforderung des jeweiligen Anlagenmodelles eine 2D- und/oder eine 3D-Darstellung der virtuellen Anlagenmodelle erfolgen kann. Die Besonderheit des erfindungsgemäßen Verfahrens und Systems besteht darin, daß die realen Anlagenkomponenten, d.h. die realen Prozesse einschließlich der aktuellen Prozeßdaten bei der Visualisierung der virtuellen Anlagenmodelle eingebunden werden. Dies erfolgt mit Hilfe der Kopplungsmittel zur Kopplung der virtuellen Anlagenmodelle mit den Prozeßdaten der realen Anlagenkomponenten. Darüber hinaus sind in der Anzeigevorrichtung beispielsweise bestimmte Bildschirmbereiche als Interaktionsmittel vorgesehen, über die eine Bedienung des realen Prozesses ermöglicht wird. Insgesamt ergibt sich somit ein System für eine Prozeßvisualisierung unter Verwendung von Virtual Reality-Modellen (=VR-Modellen). Dabei werden nach vorgebbaren Kriterien kontinuierlich die Zustände des realen Prozesses dargestellt, in dem diese auf ein animiertes, abbildungsähnliches virtuelles, Anlagenmodell abgebildet werden. Zusätzlich wird dem Anwender ermöglicht, Prozeßwerte über die Interaktion mit dem virtuellen Anlagenmodell zu verändern. Eine Möglichkeit zur Erstellung von virtuellen Anlagenmodellen ist beispielsweise in der nicht vorveröffentlichten DE 198 32 974.1 enthalten.

Ein möglichst realitätsbezogenes Navigieren eines Anwenders wird dadurch sichergestellt, daß das System eine Steuerungsvorrichtung aufweist, die zur aktuellen Visualisierung virtueller Anlagenmodelle in Abhängigkeit einer aktuellen Position einer virtuellen Kamera vorgesehen ist.

Die Übersichtlichkeit auch über komplexe Anlagen und Prozesse kann dadurch weiter verbessert werden, daß die Steuerungsvorrichtung Mittel zur Steuerung der Prozeßvisualisierung in der Weise aufweist, daß abhängig von der Entfernung eines Betrachters mehr oder weniger Informationen des virtuellen Anlagenmodells visualisiert werden.

Ein Betrachten des Inneren von Anlagenkomponenten kann dadurch erzielt werden, daß die virtuellen Anlagenmodelle transparent ausgebildet sind und die Sicht auf in der realen Anlagenkomponente verdeckte Komponententeile ermöglichen, wobei zur Sicherstellung eines räumlichen Zusammenhangs die Hülle des transparenten Anlagenmodells noch darstellbar ist.

Im folgenden wird die Erfindung anhand der in den Figuren dargestellten Ausführungsbeispiele näher beschrieben und erläutert.

Es zeigt:

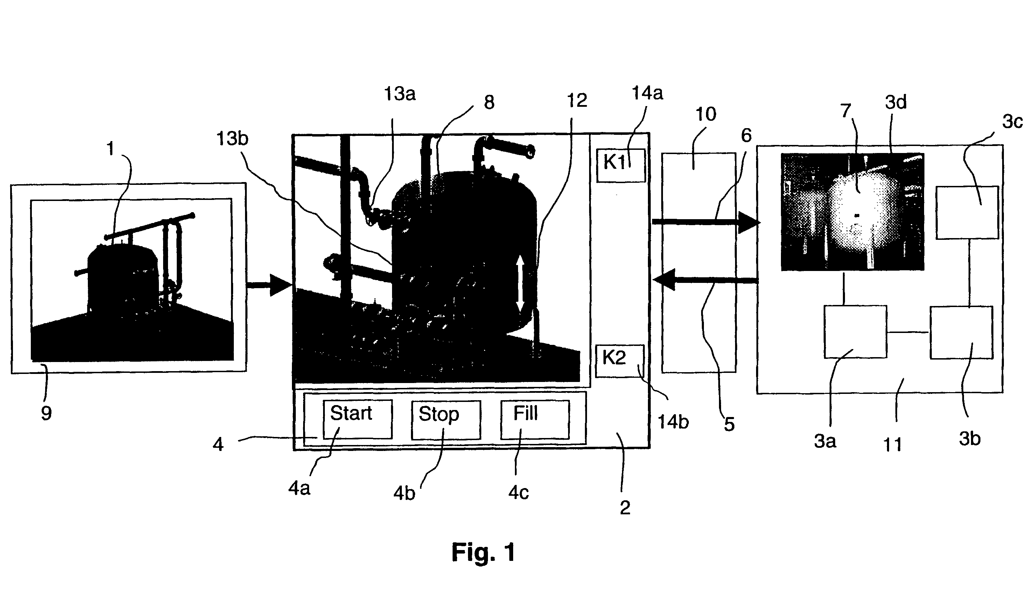

- FIG 1: ein Blockschaltbild eines Ausführungsbeispiels eines Bedien-und Beobachtungssystems mit Prozeßvisualisierung.

FIG 1 zeigt ein Blockschaltbild eines Ausführungsbeispiels eines Bedien- und Beobachtungssystems mit Prozeßvisualisierung. Das Bedien- und Beobachtungssystem besteht im wesentlichen aus einer Datenverarbeitungsvorrichtung. Die Datenverarbeitungsvorrichtung enthält u.a. eine Speichervorrichtung 9 zur Speicherung virtueller Anlagenmodelle 1 sowie Visualisierungsmittel 2 zur Visualisierung der virtuellen Anlagenmodelle 1. Neben der Darstellung der virtuellen Anlagenmodelle 1 sind auf der Anzeigevorrichtung 2 auch Interaktionsmittel 4,14 vorgesehen. Die Interaktionsmittel 4 bestehen aus einzelnen Bildschirmbereichen 4a,4b,4c, denen bestimmte Funktionen im Hinblick auf die visualisierte Anlagenkomponente zugeordnet sind. Die Interaktionsfelder 14a,14b dienen der Veränderung einer virtuellen Kameraposition, mit deren Hilfe die visualisierten Anlagenteile im mittleren Bildschirmbereich der Visualisierungsmittel 2 veränderbar sind. Weiter sind auch im Bereich des virtuellen Anlagenmodells 8 selbst auch weitere Interaktionsfelder 13a,13b vorgesehen. Durch Anklikken dieser Bereiche 13a,13b beispielsweise mittels einer "Maus" können die entsprechenden Ventile der am virtuellen Tank 8angebrachten virtuellen Rohrleitungen geöffnet oder geschlossen werden. Die Signalverarbeitungsteile der Visualisierungsmittel 2 sind über eine Koppelvorrichtung 10 mit einem aus Teilprozessen 3a..3d bestehenden realen Prozeß 3 eines Automatisierungssystems 11 gekoppelt. Hierzu dient eine erste Verbindung 6 (= Prozeßkopplung Hinkanal) als Ausgang aus den Visualisierungsmitteln, während eine zweite Verbindung 5 (= Prozeßkopplung Rückkanal) als Eingang für die Visualisierungsmittel 2 ausgebildet ist.

Die Besonderheit des in FIG 1 dargestellten Systems besteht darin, daß die virtuellen Anlagenmodelle 8 mit tatsächlichen Prozeßsignalen angereichert sind. Dies erfolgt mit Hilfe der Kopplungsvorrichtung 10 und der Verbindungen 5,6. Durch die Anreicherung mit Prozeßdaten und Prozeßsignalen wird es ermöglicht, dynamisch den aktuellen Zustand eines realen Prozesses 3 in einen virtuellen Anlagenmodell in Form der Visualisierungsmittel und der damit verbundenen Prozeßvisualisierung wieder zu spiegeln und interaktiv Prozeßwerte über das virtuelle Anlagenmodell 8 zu verändern. Dies kann beispielsweise mit Hilfe der Interaktionsmittel 4a,4b,4c erfolgen. So kann mit Hilfe des Interaktionsmittels 4a ein realer Prozeß gestartet oder mit Hilfe des Interaktionsmittels 4b gestoppt werden, während mit Hilfe des dritten Interaktionsmittels 4c ein Füllen des virtuellen 8 und realen 7 Tanks eingeleitet werden kann. Der sich dann jeweils ergebende aktuelle Füllstand des Tanks 8 kann beispielsweise mit Hilfe eines Pfeiles im Bereich des virtuellen Tankmodells veranschaulicht werden. Darüber hinaus kann der Zustand der Prozesse bzw. einer virtuellen Komponente in unterschiedlichster Form erfolgen, beispielsweise durch Farbumschläge, Positionsänderungen, etc..

Das in FIG 1 dargestellte System ermöglicht somit eine Navigation in signalbehafteten virtual-reality-Modellen, die den aktuellen Zustand eines zu beobachtenden realen Prozesses 3 wiederspiegeln. Dabei kann die aktuelle Visualisierung eines virtuellen Anlagenmodells 8 abhängig von der aktuellen Position einer virtuellen Kamera sein. Für den Anwender ist in der Prozeßvisualisierung dabei jeweils nur der aktuelle Kameraausschnitt sichtbar, wobei eine Steuerung der Kamerapositionen beispielsweise mit Hilfe der Interaktionsmittel 14a,14b erfolgen kann. In diesem Zusammenhang wird unter dem Begriff Navigation eine dynamische und interaktive Veränderung der Kameraposition durch den Anwender verstanden. Der Anwender kann somit die für ihn aktuell relevante Sicht auf de Prozeß 3 selbst bestimmen. Beispielsweise kann er von einer groben Übersicht zu einem fehlerhaften Anlagenteil navigieren, ohne die räumliche Orientierung zu verlieren (= Kamerafahrt). Dieser Nutzen kann verbessert werden durch den Einsatz von virtual reality-Techniken wie "Level of Details", Transparenz und unterschiedliche abstrakten Darstellungen für eine Anlagenkomponente. Die Technik "Level of Detail" ermöglicht dabei in Abhängigkeit von der Entfernung eines Betrachters mehr oder weniger Informationen zu einer Anlagenkomponente im virtuellen Anlagenmodell 8 zu visualisieren. Mit Hilfe der Technik "Transparenz" wird es ermöglicht, beispielsweise in das innere einer Anlagenkomponente bzw. hindurch auf verdeckte Anlagenkomponenten zu schauen, ohne daß der räumliche Kontakt verloren geht. So kann beispielsweise die der Orientierung dienende Hülle noch schwach sichtbar bleiben.

Die Visualisierung der virtuellen Anlagenmodelle erfolgt bei dem in FIG 1 dargestellten Ausführungsbeispiel perspektivisch, d.h. in einer Darstellungsweise, die aufgrund ihrer Natürlichkeit vom Menschen sehr gut interpretiert werden kann. Hierdurch wird es möglich, auch Anlagen mit großen Abmessungen kompakt auf dem Bildschirm darzustellen, ohne daß die Übersichtlichkeit verloren geht. Für die Darstellung der virtuellen Anlagenmodelle 1,8 ist eine Kombination von 2D-und 3D-Darstellungen besonders geeignet. Eine 3D-Darstellung ermöglicht eine übersichtliche Darstellung einer Anlage, wo hingegen in einer 2D-Darstellung sehr kompakt Prozeßwerte und Bedienelemente dargestellt werden können, unabhängig von der aktuellen Sicht auf eine Anlagenkomponente. Diese beiden Eigenschaften werden mit Hilfe der Prozeßvisualisierungsmittel 2 kombiniert, in dem in einem Anlagenvisualisierungsbild 2D-Elemente mit VR-Sichten (virtual reality) zu einem virtualreality-Modell kombiniert werden können. Die Auswahl einer zu betrachtenden bzw. zu bedienenden Komponente erfolgt dann beispielsweise im virtual reality-Modell die Anzeige bzw. die Veränderung der dazugehörigen Prozeßwerte beispielsweise mit Hilfe von 2D-Elementen.

Durch eine realitätsnahe Darstellung des Prozeßzustandes aufgrund der virtuellen Anlagenmodelle 8 können Erfahrung eines Anwenders, beispielsweise über kritische Zustände, beim Bedien- und Beobachten mit einfließen und beispielsweise Fehler intuitiv rechtzeitig erkannt werden. So kann z.B. die ungleichmäßige Verteilung von Behältern in einem Blocklager bzw. einem Hochregallager erkannt und Schlußfolgerungen auf eine gestörte Verteilung gezogen werden. Aufgrund der realitätsnahen Darstellung kann eine Reaktion durch den Anwender in gewohnter Weise wie "vor Ort" erfolgen. Dies führt zu einer intuitiveren und damit fehlersichereren Bedienung der Anlage 3. Der Umsetzungsschritt von der realen auf eine abstrakte Darstellung entfällt. Die räumliche Anordnung der Visualisierungsmittel 2, d.h. des Bedien- und Beobachtungssystems ist dabei völlig unabhängig von der realen Anlage 11. So kann Kopplung zwischen Visualisierungsmitteln 2 und realer Anlage 11, d.h. der Hin- und Rückkanal 5,6 beispielsweise als Ethernet-, Intra- oder Internet-Verbindung realisiert werden. Somit kann unabhängig vom tatsächlichen Standort der realen Anlage 7,11 eine realitätsnahe Bedienuung erfolgen.

Im folgenden werden die wesentlichen Verantwortlichkeiten der Prozeßvisualisierungsmittel 2 beschrieben und erläutert: Die Visualisierungsmittel 2 sind verantwortlich für das Einlesen eines virtuellen Anlagenmodells 1,8, für die Zuordnung von aktuellen Prozeßwerten zu Eingangs- und Ausgangssignalen des virtuellen Anlagenmodells 8 und den Interaktionsmitteln 4,14, für die Versorgung der Eingangssignale des virtuellen Anlagenmodells 8 mit den realen Prozeßwerten bzw. der Interaktionsmittel 4,14,14 mit dem realen Prozeß 3, für die Übertragung von Ausgangssignalen 6 des virtuellen Anlagenmodells 8 in den realen Prozeß 3, für die Visualisierung des aktuellen Prozeßzustandes auf die Basis des virtuellen Anlagenmodells 8 und zusätzlicher 2D-Elemente 4,14 beispielsweise in Form von Text und/oder Grafik, sowie für den Aufbau von Bildern für die Prozeßvisualisierung 2, bestehend aus 2D-Elementen und 3D-Views, d.h. Darstellungssichten.

Die Prozeßvisualierungsmittel 2 bilden somit ein System, welches sich aus Hard- und aus Softwarekomponenten zusammensetzt. Die Hardwarekomponenten bestehen aus üblichen Komponenten, wie sie üblicherweise im Rechnersystem vorkommen, insbesondere einer sogenannten CPU (Central Processor Unit), primären Speichern, sekundären Speichern, wie beispielsweise Festplatte, Eingabemitteln, wie beispielsweise Tastatur, Zeigergeräte (z.B. Maus, 3D-Maus), Ausgabevorrichtungen wie beispielsweise Grafikkarte, Bildschirm, Videoprojektor, 3D-Projektoren, etc. sowie Kommunikationsmitteln wie beispielsweise eine Netzwerkkarte für Ethernet. Die Nutzung der Hardware und die Koordinierung der Softwaremodule wird dabei durch ein Betriebssystem unterstützt.

Die Prozeßvisualisierungsmittel setzen sich darüber hinaus aus folgenden Komponenten zusammen: Aus einem sogenannten virtual reality-Import, welcher für das Einlesen eines virtual reality-Modells beispielsweise im VRML-Format und für eine Umsetzung in die interne Repräsentation der Komponentenvisualisierung sorgt. Die Komponente Visualisierung ist in der Lage, bestehend aus 2D-Elementen und 3D-Sichten, auf einem Projektionssystem, beispielsweise einem Computerbildschirm zu visualisieren und aufgrund von Ereignissen bzw. Änderungen von Prozeßwerten des realen Prozesses 3 die Bilder zu aktualisieren, Eingaben beispielsweise über die Interaktionsmittel 4,13,14 zu erfassen und an die 2D-Elemente bzw. 3D-Sichten weiterzuleiten. Unter Ereignis wird dabei ein Wert verstanden, der über das Betriebssystem, z.B. durch einen Mausklick oder die Prozeßkopplung an Komponenten mit einer Ereignisschnittstelle geschickt werden kann.

Unter 2D-Elementen werden typische Elemente einer Computergrafik bezeichnet, wie Linien, Kurven, Rechtecke, Texte etc., wobei 2D-Elemente auch aus einer Gruppierung weiterer 2D-Elemente bestehen können. Die 2D-Elemente und 3D-Sichten des in FIG 1 dargestellten Bedien- und Beobachtungssystems besitzen eine Schnittstelle, über die Ereignisse gesendet bzw. empfangen werden können. Eingehende Ereignisse können dabei zu einer Änderung des internen Zustands eines 2D-Elements bzw. einer 3D-Sicht führen, d.h. beispielsweise zu einer Änderung seiner Darstellung wie Farbumschlag, Positionsänderung, Größenänderung. Mit Hilfe der 3D-Sichten oder 3D-Views erfolgt eine Visualisierung der virtuellen Anlagenmodelle 1,8.Mit Hilfe der Datenhaltung werden alle Bildinformationen, der Aufbau der Bilder, die Verschaltung von 2D-Elementen und 3D-Sichten mit Prozeßwerten oder zwischen 2D-Elementen und 3D-Sichten, die Liste der zur Verfügung stehenden Prozeßwerte und die Kommunikationsinformationen, die für einen Austausch der Prozeßwerte mit dem realen Prozeß benötigt werden, gespeichert.

Zusammenfassend betrifft die Erfindung somit ein System und ein Verfahren zum Bedienen und Beobachten eines Automatisierungssystems, bei dem Prozesse des Automatisierungssystems durch virtuelle Anlagenmodelle 1 als Abbild realer Anlagenkomponenten 7 mittels einer Anzeigevorrichtung 2 visualisiert werden und bei dem auf der Anzeigevorrichtung 2 Eingabebildschirmbereiche 4a,4b,4c,13a,13b,14a,14b zur interaktiven Bedienung und Beobachtung von visualisierten Anlagenkomponenten 8 vorgesehen sind. Das Verfahren ermöglicht eine Navigation in virtuellen Anlagenmodellen 8, die exakt die realen und jeweils aktuellen Zustände wiederspiegeln. Durch eine Kombination von 2D- und 3D- Visualisierung können für verschiedene Anwendungsfälle die jeweils günstigsten Darstellungsformen gewählt werden. Insgesamt ergibt sich eine realitätsbezogene Darstellung, die ein intuitives Bedienen und Beobachten auch komplexer Prozesse ermöglicht.

## Patentansprüche

1. System zum Bedienen und Beobachten eines realen Prozesses (3) einer realen Anlage (11), insbesondere eines Automatisierungssystems mit einer Speichervorrichtung (9) zur Speicherung virtueller Anlagenmodelle (1) als Abbild realer Anlagenkomponenten (7), mit Visualisierungsmitteln (2) zur Visualisierung der virtuellen Anlagenmodelle (1) insbesondere als 2D- und/oder als 3D-Objekte und mit Kopplungsmitteln (10) zur Kopplung der virtuellen Anlagenmodelle (1) mit Prozeßdaten (5) der realen Anlagekomponenten (7) über eine als Prozeßkopplung-Rückkanal ausgebildete zweite Verbindung (5) als Eingang für die Visualisierungsmittel (2) und zur Kopplung von in den virtuellen Anlagenmodellen (1, 8) und/oder den Visualisierungsmitteln (2) enthaltenen Interaktionsmitteln (4) über eine als Prozeßkopplung-Hinkanal ausgebildete erste Verbindung (6) als Ausgang aus den Visualisierungsmitteln (2).

2. System nach Anspruch 1,
**dadurch gekennzeichnet,**
**daß** das System eine Steuerungsvorrichtung aufweist, die zur aktuellen Visualisierung virtueller Anlagenmodelle (1, 8) in Abhängigkeit einer aktuellen Position einer virtuellen Kamera (14a,14b) vorgesehen ist.

3. System nach einem der Ansprüche 1 oder 2,
**dadurch gekennzeichnet,**
**daß** die Steuerungsvorrichtung Mittel zur Steuerung der Prozeßvisualisierung in der Weise aufweist, daß abhängig von der Entfernung eines Betrachters mehr oder weniger Informationen des virtuellen Anlagenmodells (1, 8) visualisiert werden.

4. System nach einem der Ansprüche 1 bis 3,
**dadurch gekennzeichnet,**
**daß** die virtuellen Anlagenmodelle (1, 8) transparent ausgebildet sind und die Sicht auf in der realen Anlagenkomponente (7) verdeckte Komponententeile ermöglichen, wobei zur Sicherstellung eines räumlichen Zusammenhangs die Hülle des transparenten Anlagenmodells noch darstellbar ist.

5. Verfahren zum Bedienen und Beobachten eines realen Prozesses (3) einer realen Anlage (11), insbesondere eines Automatisierungssystems, bei dem in einer Speichervorrichtung (9) virtuelle Anlagenmodelle (1) als Abbild realer Anlagenkomponenten (7) gespeichert werden, bei dem mittels Visualisierungsmitteln (2) die virtuellen Anlagenmodelle (1) insbesondere als 2D- und/oder als 3D-Objekte visualisiert werden, bei dem die virtuellen Anlagenmodelle (1) mit Prozeßdaten (5) der realen Anlagekomponenten (7) über eine als Prozeßkopplung-Rückkanal ausgebildete zweite Verbindung (5) als Eingang für die Visualisierungsmittel (2) gespeist werden und bei dem die reale Anlage über in den virtuellen Anlagenmodellen (1, 8) und/oder den Visualisierungsmitteln (2) enthaltene Interaktionsmittel (4) über eine als Prozeßkopplung-Hinkanal ausgebildete erste Verbindung (6) als Ausgang aus den Visualisierungsmitteln (2) bedienbar ist.

6. Verfahren nach Anspruch 5,
**dadurch gekennzeichnet,**
**daß** virtuelle Anlagenmodelle (1, 8) in Abhängigkeit einer aktuellen Position mindestens einer virtuellen Kamera (14a, 14b) visualisiert werden.

7. Verfahren nach einem der Ansprüche 5 oder 6,
**dadurch gekennzeichnet,**
**daß** abhängig von der Entfernung eines Betrachters mehr oder weniger Informationen des virtuellen Anlagenmodells (1, 8) visualisiert werden.

8. Verfahren nach einem der Ansprüche 5 bis 7,
**dadurch gekennzeichnet,**
**daß** die virtuellen Anlagenmodelle (1, 8) transparent ausgebildet sind und die Sicht auf in der realen Anlagenkomponente (7) verdeckte Komponententeile ermöglichen, wobei zur Sicherstellung eines räumlichen Zusammenhangs die Hülle des transparenten Anlagenmodells noch darstellbar ist.

## Claims

1. System for operating and monitoring a real process (3) of a real installation (11), specifically an automation system, having a storage device (9) for storing virtual installation models (1) as a representation of real installation components (7), having visualisation means (2) for visualising the virtual installation models (1) specifically as 2D and/or 3D objects and having coupling means (10) for coupling the virtual installation models (1) to process data (5) of the real installation components (7) via a second connection (5) implemented as a process coupling return channel as an input for the visualisation means (2) and for coupling interaction devices (4) contained in the virtual installation models (1, 8) and/or the visualisation means (2) via a first connection (6) implemented as a process coupling forward channel as an output from the visualisation means (2).

2. System according to Claim 1, **characterised in that** the system has a control facility which is provided for the current visualisation of virtual installation models (1, 8) depending on the current position of a virtual camera (14a, 14b).

3. System according to one of Claims 1 or 2, **characterised in that** the control facility has means of controlling process visualisation such that more or less information of the virtual installation model (1, 8) is visualised depending on the viewing distance of an observer.

4. System according to one of Claims 1 to 3, **characterised in that** the virtual installation models (1, 8) are implemented transparently and enable component parts hidden within the real installation components (7) to be viewed, the exterior of the transparent installation model still being displayable to provide a spatial context.

5. Method of operating and monitoring a real process (3) of a real installation (11), specifically an automation system, wherein virtual installation models (1) are stored in a storage device (9) as an image of real installation components (7), wherein the virtual installation models (1) are visualised using visualisation means (2), specifically as 2D and/or 3D objects, wherein the virtual installation models (1) are supplied with process data (5) of the real installation components (7) via a second connection (5) implemented as a process return channel as input for the visualisation means (2) and wherein the real installation can be operated via interaction devices (4) contained in the virtual installation models (1, 8) and/or the visualisation means (2) via a first connection (6) implemented as a process forward channel as output from the visualisation means (2).

6. Method according to Claim 5, **characterised in that** virtual installation models (1, 8) are visualised as a function of a current position of at least one virtual camera (14a, 14b).

7. Method according to one of Claims 5 or 6, **characterised in that** more or less information of the virtual installation model (1, 8) is visualised depending on the viewing distance of an observer.

8. Method according to one of Claims 5 to 7, **characterised in that** the virtual installation models (1, 8) are implemented transparently and allow hidden component parts in the real installation component (7) to be viewed, the exterior of the transparent installation model still being displayable to provide the spatial context.

## Revendications

1. Système de commande et de contrôle d'un processus réel (3) d'une installation réelle (11), notamment d'un système d'automatisation, comportant un dispositif de mémorisation (9) pour mémoriser des modèles d'installation virtuels (1) en tant qu'images d'éléments d'installation réels (7), des moyens de visualisation (2) pour visualiser les modèles d'installation virtuels (1) notamment comme objets en 2D et/ou en 3D et des moyens de couplage (10) pour le couplage des modèles d'installation virtuels (1) avec des données de processus (5) des éléments d'installation réels (7) par l'intermédiaire d'une deuxième liaison (5), conçue comme canal de retour de couplage de processus, comme entrée pour les moyens de visualisation (2) et pour le couplage de moyens d'interaction (4) contenus dans les modèles d'installation virtuels (1, 8) et/ou dans les moyens de visualisation (2) par l'intermédiaire d'une première liaison (6), conçue comme canal d'aller de couplage de processus, comme sortie des moyens de visualisation (2).

2. Système selon la revendication 1,
**caractérisé par le fait que** le système comporte un dispositif de commande qui est prévu pour la visualisation actuelle de modèles d'installation virtuels (1, 8) en fonction d'une position actuelle d'une caméra virtuelle (14a, 14b).

3. Système selon l'une des revendications 1 ou 2,
**caractérisé par le fait que** le dispositif de commande comporte des moyens pour la commande de la visualisation de processus de telle sorte que plus ou moins d'informations du modèle d'installation virtuel (1, 8) sont visualisées en fonction de l'éloignement d'un observateur.

4. Système selon l'une des revendications 1 à 3,
**caractérisé par le fait que** les modèles d'installation virtuels (1, 8) sont conçus de façon transparente et permettent une vue sur des parties d'éléments cachées dans les éléments d'installation réels (7), l'enveloppe du modèle d'installation transparent pouvant encore être représentée pour garantir le contexte spatial.

5. Procédé de commande et de contrôle d'un processus réel (3) d'une installation réelle (11), notamment d'un système d'automatisation, dans lequel on mémorise dans un dispositif de mémorisation (9) des modèles d'installation virtuels (1) en tant qu'images d'éléments d'installation réels (7), dans lequel on visualise avec des moyens de visualisation (2) les modèles d'installation virtuels (1) notamment comme objets en 2D et/ou en 3D, dans lequel on introduit les modèles d'installation virtuels (1) avec des données de processus (5) des éléments d'installation réels (7) par l'intermédiaire d'une deuxième liaison (5), conçue comme canal de retour de couplage de processus, comme entrée pour les moyens de visualisation (2) et dans lequel on peut commander l'installation réelle par l'intermédiaire de moyens d'interaction (4) contenus dans les modèles d'installation virtuels (1, 8) et/ou dans les moyens de visualisation (2) par l'intermédiaire d'une première liaison (6), conçue comme canal d'aller de couplage de processus, comme sortie des moyens de visualisation (2).

6. Procédé selon la revendication 5,
**caractérisé par le fait qu'**on visualise des modèles d'installation virtuels (1, 8) en fonction d'une position actuelle d'au moins une caméra virtuelle (14a, 14b).

7. Procédé selon l'une des revendications 5 ou 6,
**caractérisé par le fait qu'**on visualise plus ou moins d'informations du modèle d'installation virtuel (1, 8) en fonction de l'éloignement d'un observateur.

8. Procédé selon l'une des revendications 5 à 7,
**caractérisé par le fait que** les modèles d'installation virtuels (1, 8) sont conçus de façon transparente et permettent une vue sur des parties d'éléments cachées dans les éléments d'installation réels (7), l'enveloppe du modèle d'installation transparent pouvant encore être représentée pour garantir le contexte spatial.
